# EUROPEAN PATENT SPECIFICATION

(11) **EP 1 468 566 B1**
(45) Date of publication and mention of the grant of the patent: **17.01.2007**
(21) Application number: 03710731.5
(22) Date of filing: 22.01.2003
(51) Int. Cl.: H04N 7/26, H04N 7/24, H04N 5/76

(54) **METHODS FOR ENCODING AND DECODING VIDEO DATA TO ENABLE RANDOM ACCESS AND SPLICING**
VERFAHREN ZUM ERMÖGLICHEN VON DIREKTZUGRIFF UND SPLEISSEN IN EINEM VERSCHLÜSSELTEN VIDEOSTROM
PROCEDES DE CODAGE ET DE DECODAGE DE DONNEES VIDEO PERMETTANT UN ACCES ALEATOIRE ET UN COLLAGE

(30) Priority: 22.01.2002 US 351143 P
(43) Date of publication of application: 20.10.2004
(73) Proprietor: MICROSOFT CORPORATION, Redmond, Washington 98052-6399 (US)
(72) Inventor: SULLIVAN, Gary, J., Redmond, WA 98053 (US)
(74) Representative: Schuster, Thomas
(86) International application number: PCT/US2003/002138
(87) International publication number: WO 2003/063500

(56) References cited:
- EP-A- 1 043 892
- WO-A-00/56077
- US-B1- 6 266 158
- ANDERSEN D B: "A proposed method for creating VCR functions using MPEG streams" DATA ENGINEERING, 1996. PROCEEDINGS OF THE TWELFTH INTERNATIONAL CONFERENCE ON NEW ORLEANS, LA, USA 26 FEB.-1 MARCH 1996, LOS ALAMITOS, CA, USA,IEEE COMPUT. SOC, US, 26 February 1996 (1996-02-26), pages 380-382, XP010158937 ISBN: 0-8186-7240-4

## Description

### TECHNICAL FIELD

This invention relates to methods for encoding and decoding data.

### BACKGROUND OF THE INVENTION

Digital data is typically transmitted from some type of transmitter to some type of receiver. Transmitters typically include an encoder that encodes the data for transmission; and receivers typically include a decoder that decodes data that it receives. There are different types of digital data such as video data, audio data, audio/video data and the like. When digital data is transmitted, it is typically transmitted in some type of channel.

The predominant video compression and transmission formats are from a family called hybrid block-based motion-compensated transform video coders, examples of which include the video coding standards of the ITU-T VCEG (Video Coding Experts Group) and ISO/IEC MPEG (Moving Picture Experts Group) organizations - including H.261, MPEG-1, H.262/MPEG-2 Video, H.263, MPEG-4 Visual, and the in-process draft standard H.264/AVC. Coding and compression standards have also been specified for many other types of media including still pictures, audio, documents, web pages, and such, and for multiplexing together and synchronizing such signals.

The most widely used video coding standard is H.262/MPEG-2 Video, which we will use as a reference example herein. Generally, an MPEG-2 video stream is composed of three types of frames or pictures. In this document, we use the term "picture". The three types of MPEG-2 pictures are:
- intra pictures (I-pictures);
- predictive pictures (P-pictures); and
- bi-directionally predictive pictures (B-pictures).

An MPEG-2 video stream or sequence is typically defined by segments called Groups of Pictures (GOPs). Typically, a GOP consists of a set of pictures of ½ second duration when displayed at their intended speed.

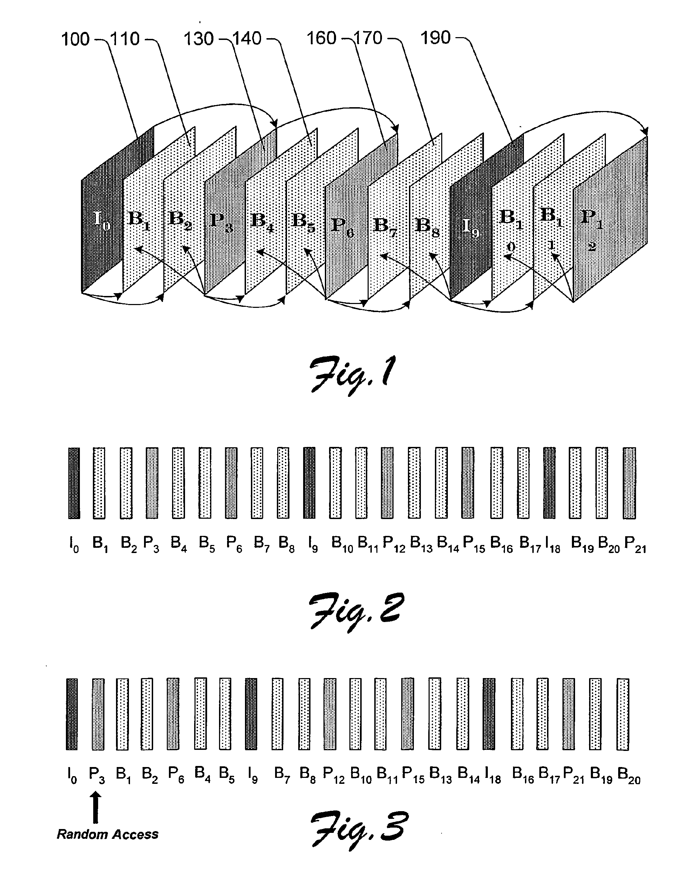

Fig. 1 illustrates the beginning of an MPEG-2 video stream consisting of a sequence of pictures ordered and indexed from left to right in the order in which the pictures will be displayed and starting with an I-picture 100 (I₀). In this example the first GOP starts with the first I-picture 100 (I₀) and contains subsequent pictures up to and including the last P-picture 160 (P₆) that precedes the next I-picture 190 (I₉). The second GOP starts with the first B-picture 170 (B₇) that precedes the second I-picture 190 (I₉). The first example GOP in this example sequence includes one I-picture; two P-pictures; and four B-pictures. Each GOP includes one or more consecutive pictures beginning with an I-picture such as picture 100 (I₀) that is not immediately-preceded by a B-picture or beginning with the first B-picture such as 170 (B₇) in a sequence of one or more consecutive B-pictures that immediately precedes an I-picture, such as 190 (I₉).

Decoding typically begins by decoding the first I-picture of any GOP, essentially independent of any preceding GOPs-for example, at I-picture 100 (I₀) in the first GOP or at I-picture 190 (I₉) in the second GOP. There is no specific limit to the number of pictures which may be in a GOP, nor is there a requirement for an equal number of pictures in all GOPs in a video sequence.

MPEG-2 I-pictures and P-pictures are called "anchor" pictures (or "key" pictures). An I-picture can be decoded independently of any other pictures. It does not rely on data from any other picture to construct its image. An MPEG-2 P-picture such as picture 130 (P₃) requires data from one previously decompressed anchor picture (e.g., I-pictures or P-pictures) to enable its decompression. While it is dependent, it is only dependent on one anchor picture that has already been decoded.

An MPEG-2 B-picture such as picture 110 (B₁) requires data from both preceding and succeeding anchor pictures (e.g., I-pictures or P-pictures) to be decoded. That is, an MPEG-2 B-picture is bi-directionally dependent.

In Fig. 1, the ends of the arrows indicate the picture(s) from which the arrow-pointed picture is dependent. For example, B-picture 140 (B₄) is dependent upon P-picture 130 (P₃) and P-picture 160 (P₆).

Now consider the picture sequence of Fig. 2 which illustrates the *display order* of the same sequence of individual I-, B- and P- pictures, in which some additional pictures are shown after the last picture shown in Fig. 1 and in which the beginning of a third GOP is shown starting with picture B₁₆. The display order is the order in which the pictures are to be displayed. So, for example, if one were displaying the individual pictures, I₀ would be the first picture displayed, followed by B₁, B₂ and so on. Notice, however, that if one looks at the sequence from the standpoint of those pictures that are predicted (i.e. the B-pictures), in order to decode a B-picture, the decoder must refer to the decoded value of an I-picture or P-picture that follows after it in time. So in this example, in order to decode B₂, the decoder will refer to both I₀ and P₃. That is, the decoder will have to decode both I₀ and P₃ in order to decode B₂.

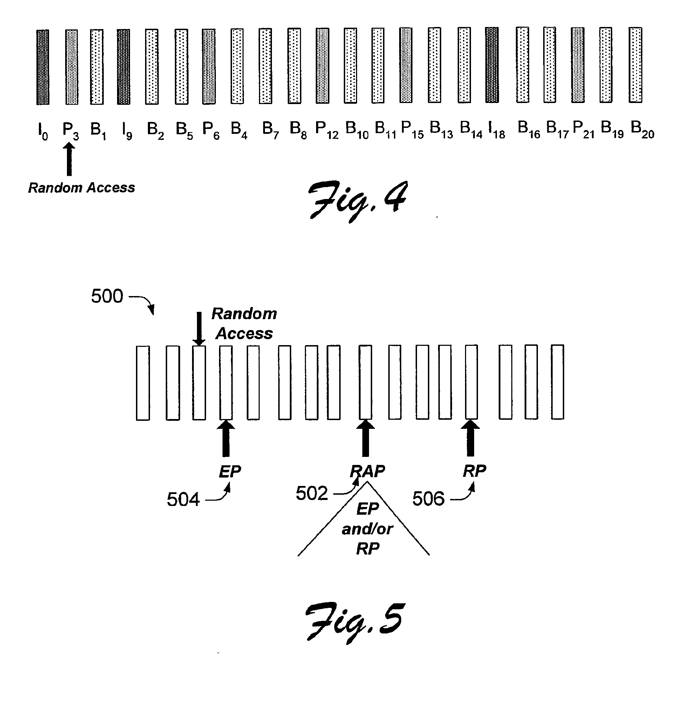

Accordingly, the encoder typically transmits the pictures in a different order than the display order, so that the decoder can decode them as it receives them. For example, Fig. 3 illustrates *the transmission order* or *decoding order* of the Fig. 2 sequence. Because the decoder has to decode I-pictures and P-pictures before the B-pictures that reference them, the I-pictures and P-pictures are sent before the B-pictures that reference them. Here, notice that P₃ is sent before B₁ and B₂ that reference it. Thus, when the decoder receives the sequence in its transmission order, it can first decode I₀ and then P₃ which references I₀. Next, because it has decoded both I₀ and P₃, the decoder can now decode B₁ and B₂- Once the decoder has decoded a sufficient number of pictures, it will rearrange the pictures into display order for displaying. In the example, the decoder can accomplish the rearrangement by having its decoding process for I-pictures and P-pictures lag one anchor picture behind its display process (allowing the display of I₀ after the decoding of P₃, the display of B₁ immediately after decoding it, the display of B₂ immediately after decoding it, the display of P₃ after the decoding of P₆, the display of B₄ immediately after decoding it, the display of B₅ immediately after decoding it, the display of P₆ after the decoding of I₉, the display of B₇ immediately after decoding it, etc.).

Now consider the situation in which the Fig. 3 sequence is randomly accessed. For example, assume that a user is watching, on a digital television, a program that has been encoded as described above and suddenly changes the channel to another encoded program. If the decoder attempts to access the sequence at a B-picture, the decoder will be unable to decode the B-picture because it does not have the information that the B-picture refers to, e.g. the previous-in-time I-picture or P-picture. Similarly, if the decoder randomly accesses the sequence at a P-picture, it will be unable to decode it because it will not have the previous-in-time P- or I-picture to which it refers. Thus, in the encoding scheme described above, the decoder will not be able to properly decode pictures within the sequence until it detects an I-picture. So typically what the decoder will do is scan forward in the sequence until it locates an I-picture. Once it locates an I-picture, it can start decoding and decode the I-picture properly. Then, after detecting and decoding one additional subsequent anchor picture, it can start displaying good quality pictures from that point forward, as all pictures that follow that point in decoding order will be decodable and as it has fulfilled its degree of lag necessary to rearrange the pictures out of decoding order into display order.

For example, assume that in Fig. 3, the decoder randomly accesses the picture sequence at picture P₃. At this point, because P₃ depends on I₀ and the decoder does not have I₀, it will not be able to decode P₃. The system then waits until it gets to the I₉ picture which it knows it can decode. Following the I₉ picture, the decoder receives the B₇ and B₈ pictures which depend on P₆ and I₉. Although the system does have I₉, it does not have the P₆ picture. That is, although the decoder received the P₆ picture, this picture depends on P₃ which, in turn depends on I₀. Since the decoder was not able to decode P₃, it will not be able to decode P₆, B₇ and B₈.

The next picture the system receives is P₁₂ which depends only on I₉. Accordingly, the system can decode P₁₂. Once the system decodes P₁₂, it will then receive, and can decode, pictures B₁₀ and B₁₁. Accordingly, from this point onward in the transmission order, all of the pictures can be suitably decoded and displayed.

Accordingly, randomly accessing an encoded sequence, such as one encoded as described above, does not always provide instantly decodable and displayable pictures.

One of the mechanisms that MPEG-2 provides to assist in random accesses is known as a "closed GOP flag". Specifically, on individual I-pictures, a closed GOP flag can be provided by the encoder that indicates whether any subsequent pictures in the transmission order (after the I-picture) refer to a picture previous to the I-picture. That is, if the closed GOP flag is "true", then the GOP is closed and any B-pictures that follow the I-picture in decoding order (if there are any B pictures), do not refer to any pictures previous to the I-picture in decoding order. Thus, a closed GOP means that the GOP is self-contained and can be decoded by the decoder. Thus, even though one could, in the B-pictures, refer to a previous-in-order picture, the closed GOP flag indicates that this was not actually done when it was encoded. If, on the other hand, the closed GOP flag is false, this means that the GOP is not closed and tells the decoder that the B-pictures depend on pictures and data that the decoder does not have. Accordingly, the decoder knows that it cannot decode the next following B-pictures (any B-pictures that follow in decoding order prior to the next anchor picture). In this situation, the decoder would decode the I-picture, and then skip over the next B-pictures and decode the P-picture. After this point, the decoder has recovered and can start displaying video and decoding any subsequent B-pictures. In the example sequence shown in Fig. 3, the GOP that starts with picture I₀ is closed, while the GOPs that start with pictures I₉ and I₁₈ may or may not be closed (depending on whether the B-pictures that immediately follow each of those I-pictures in decoding order use prediction from the picture previous to the I-picture).

As video coding and decoding standards evolve and grow more complex, continuing challenges are posed to provide and enhance functionalities, such as random accessibility, without degrading the user's experience. Accordingly, this invention arose out of concerns associated with providing improved methods and system for encoding and decoding digital data.

### SUMMARY OF THE INVENTION

Various embodiments provide approaches that facilitate decoding in the context of video coding methods that allow for complicated dependencies among pictures of an encoded sequence of pictures. In some embodiments, the notion of a random access point or "RAP" is utilized. A random access point is effectively a location within a picture sequence that contains information that facilitates random access of the sequence. In some embodiments, a random access point can contain different types of data. Such data can be defined, in some embodiments, in terms of picture count and/or time. In some embodiments, a random access point's data can comprise one or more of an entry point and a recovery point. These points effectively provide measures that a decoder can use to ascertain when its decoding activities will result in accurately and suitably decoded pictures.

### BRIEF DESCRIPTION OF THE DRAWINGS

Fig. 1 is a diagram that illustrates I-, B-, and P-pictures in accordance with one prior art encoding format.
Fig. 2 illustrates a picture sequence comprising I-, B-, and P-pictures in a display order.
Fig. 3 illustrates a picture sequence comprising I-, B-, and P-pictures in a transmission order, and in which random access is attempted.
Fig. 4 illustrates a picture sequence comprising I-, B-, and P-pictures in which random access is attempted.
Fig. 5 illustrates a picture sequence comprising I-, B-, and P-pictures containing data in accordance with one embodiment.
Fig. 6 is a flow diagram describing steps in a decoding method in accordance with two embodiments.
Fig. 7 is a flow diagram describing steps in a method in accordance with one embodiment.
Fig. 8 illustrates a picture sequence containing a splice point and which can assist in understanding one particular context in which one or more of the embodiments can be employed.
Fig. 9 is a high level diagram of a computing environment in connection with which one or more embodiments can be implemented.

### DETAILED DESCRIPTION OF THE PREFERRED EMBODIMENT

### Overview

The embodiments described below provide an approach that facilitates decoding in the context of video coding standards that allow for complicated dependencies among pictures of an encoded sequence of pictures. Introduced is the notion of a random access point or "RAP". A random access point is effectively a location within a picture sequence that contains information that facilitates random access of the sequence.

The random access point can contain one or more types of information that can be utilized by a decoder to facilitate randomly accessing the sequence and decoding pictures within it. One type of information that a random access point can contain is referred to as an entry point or EP. Another type of information that a random access point can contain is referred to as a recovery point or RP. As the random access point can contain one or more types of information, it follows that the random access point can contain either or both of an entry point and a recovery point. And, although the concepts of entry points and recovery points are discussed below, it is to be appreciated and understood that these two types of information constitute but examples of specific types of information that can be included in a picture sequence. Accordingly, other types of information can be included without departing from the scope of the claimed subject matter.

Entry and recovery points effectively provide measures that a decoder can use to ascertain when its decoding activities will result in accurately and suitably decoded pictures. This will become more apparent as the description below is read. It is possible that some of the techniques described herein can be employed in connection with data that is not video such, e.g. audio data.

### Exemplary Video Coding Standard With Which Inventive Embodiments Can Be Employed

Before describing aspects of the inventive embodiments, it will be useful to discuss one video coding standard with which the inventive embodiments can be used. The video coding standard described below is the work of the Joint Video Team (JVT) standard development project, which is a joint project of the ITU-T Video Coding Experts Group (VCEG) and the ISO/IEC Moving Picture Experts Group (MPEG) for the development of a new video coding standard. The JVT project was created in December of 2001 to take over the work previously under way in the ITU-T H.26L project of VCEG and create a final design for standardization in both the ITU-T and MPEG. The main goals of the JVT/H.26L standardization effort are the definition of a simple and straightforward video coding design to achieve enhanced compression performance and provision of a "network-friendly" packet-based video representation addressing "conversational" (i.e., video telephony) and "non-conversational" (i.e., storage, broadcast, or streaming) applications. Hence, the JVT/H.26L design covers a Video Coding Layer (VCL), which provides the core high-compression representation of the video picture content, and a Network Abstraction Layer (NAL), which packages that representation for delivery over a variety of networks. The VCL design has achieved a significant improvement in rate-distortion efficiency - providing approximately a factor of two in bit-rate savings against existing standards. The NAL designs are being developed to transport the coded video data over existing and future networks such as circuit-switched wired networks, MPEG-2/H.222.0 transport streams, IP networks with RTP packetization, and 3G wireless systems. Upon approval, the JVT standard is expected to be designated as ITU-T Recommendation H.264 and as ISO/IEC 14496-10 "Advanced Video Coding".

The video coding standard about to be described still utilizes the concept of I-, B-, and P-pictures, but defines them in a different, more complex manner. A good perspective from which to appreciate the presently-described video coding standard is from the MPEG-2 perspective described above. Recall that the MPEG-2 standard provided for the following encoding/decoding paradigm briefly summarized here:
- An I-picture can be decoded *independently* of any other pictures (e.g., P- and B-pictures); and, in decoding order, the first picture in a GOP is an I-picture.
- A P-picture requires data from exactly one *previously* decompressed anchor picture (e.g., I-pictures or P-pictures) to enable its decoding; and the anchor picture used in the decoding of the P-picture is the last anchor picture that *precedes* the P-picture in order; and it precedes the P-picture in both transmission order and display order.
- A B-picture requires data from two anchor pictures (e.g., I-pictures or P-pictures) to enable its decoding. These are the last two anchor pictures that precede B picture in transmission order, the first of which is a *preceding* picture in display order and the second of which is a *succeeding* picture in display order.

In accordance with the JVT paradigm for video encoding and decoding, an I-picture still represents an independently-decodable picture. A P-picture, however, is defined somewhat differently. According to the new standard, a P-picture can have more than one reference picture, whereas before it had only one previous reference picture. Specifically, each region of a P-picture has one reference picture, but collectively the individual regions of a P-picture can reference different pictures. Thus, as a whole, an individual P-picture can reference different pictures. For example, using the sequence of Fig. 2, it is now possible for picture P₆ to reference both pictures P₃ and I₀. In addition to referencing multiple pictures, an individual P-picture may also reference future pictures in display order. For example, some regions of the P₆ picture could be predicted from pictures I₀, P₃ and I₉, where picture I₉ is a picture in the future in display order relative to picture P₆. Thus, the number of pictures that a P-picture can depend on and the ordering of those pictures in display order is almost arbitrary within the limits of the decoder capacity to store pictures.

Additionally B-pictures are defined somewhat differently. First, in the previous definition, a B-picture had two reference pictures. In that prior design, the decoding process of each region of a B-picture such as picture B₁ could reference a region of its preceding or succeeding anchor picture in display order, such as picture I₀ or P₃, or could reference a region in both of them to form some mathematical average between them. In the new B-picture definition, this concept is retained (i.e. each region being capable of referencing one particular region of a previously-decoded picture or the average of two such regions), but now is generalized to be able to select these one or two regions for the decoding of each region of the B-picture from any number of pictures (i.e. 1 or more pictures that precede the B-picture in decoding order). Thus, instead of referring to just two pictures, the B-picture can refer to any reasonable number of pictures and/or a mathematical combination of any reasonable number of pictures. So, for example, with reference to the Fig. 2 sequence, picture B₂ can reference pictures I₀, P₃, and I₉ and, between these three reference pictures it can refer, for decoding any region in the B-picture, to a single region of one of those reference pictures or to a mathematical average between two such regions of those pictures.

Additionally, a B-picture is now different from the old standard in that in the old standard, B-pictures were not used as anchor pictures for the decoding of other pictures. In accordance with the standard being now described, B-pictures can be stored for use as a reference and the decoding process of other pictures can depend on them. For example, the decoding process for picture B₄ in Fig. 2 could refer to the content of pictures B₂, P₃, B₅, and P₆.

One concept that is retained in the new standard from the old one, although in significantly generalized form, is the distinction between transmission order (also called decoding order) and display order. In the new draft standard, any pictures that are used as anchor pictures in the decoding process of other pictures are transmitted to the decoder before the picture or pictures that refer to them. Other than this restriction that pictures are sent in the order of data dependencies, there are almost no restrictions on the order of transmission of pictures other than the capacity of the decoder to store them until they are no longer needed for reference or display purposes. Thus, if picture P₆ references pictures P₃, I₀, and I₉, it must follow them in decoding order. If picture B₁ references pictures I₀ and P₃, it must follow them in decoding order. If picture B₂ references pictures I₀, P₃, and I₉, it must follow them in decoding order. And if picture B₄ references pictures B₂, P₃, B₅, and P₆, it must follow them in decoding order. One transmission order that obeys these constraints is shown in Fig. 4.

Thus, this new standard can be briefly summarized as follows:
- I-pictures are independently decodable;
- I-pictures are not necessarily sent in display order;
- P-pictures can reference more than one picture-that is, each different region of a P picture can reference a different picture;
- P-pictures can reference not only past pictures in display order, but future pictures in display order as well, although it can only reference previous pictures in decoding order;
- B-pictures can reference more than two reference pictures-that is, each region of a B-picture can reference one region of one of a number of previous pictures in decoding order or a mathematical average of two such regions;
- B-pictures can reference a set of pictures that precedes the B-picture in display order, or a set of pictures that succeeds the B-picture in display order, or a set of pictures that contains some pictures that precede and some pictures that succeed the B-picture, although it can only reference previous pictures in decoding order;
- B-pictures can be used as anchor pictures for reference in the decoding of other pictures, for example, they can be used to predict a P-picture.

Now consider the problem of attempting to randomly access a picture sequence encoded in accordance with the standard described just above. Assume, for example, that the decoder attempts to randomly access the Fig. 3 sequence (which has been encoded in accordance with the standard described just above). Assume that access takes place at picture B₈. If one proceeds, as in the MPEG-2 approach, and scans forward to the next I-picture, this picture may not be of much use because many subsequent pictures may still depend on pictures that the decoder does not have. Hypothetically, for example, picture P₆ and P₁₂ may depend on the I₀ picture in addition to depending on the I₉ picture. So here, the decoder might not be able to decode the P-pictures despite having decoded a preceding I-picture. Pictures may also be sent long before they are needed for display, so a decoder using random access may not have any assurance of having all the pictures that need to be displayed even if it is able to decode all pictures that it encounters.

In the MPEG-2 scenario, the situation was much simpler with the use of the closed GOP flag. There, if a decoder started decoding at a random access point for which ClosedGOPflag = 1, it was assured that by decoding the next I-picture, it would be able to decode and display that picture and all subsequent pictures in decoding order. There, if a decoder started decoding at a random access point for which ClosedGOPflag = 0, it was assured that by decoding the next I-picture, it would be able to decode the next P-picture, and then it would be able to decode and display all of the remaining pictures of all picture types in the sequence starting with that P-picture. This is not sufficiently flexible for the standard described just above. If all that is available is a closed GOP flag, then there is no assurance that any P-pictures or B-pictures of the subsequent video that follow an I-picture can be decoded unless the flexible referencing capability of the new draft standard were to be impaired to impose this behavior. The decoder simply does not have any way to determine whether it can ever start decoding and displaying the video (except for I-pictures). The decoder must be careful about even attempting to decode any P- or B- pictures, since the decoder may be in the midst of attempting to decode some video when it suddenly encounters some region of a new picture it is trying to decode that requires referring to a picture that the decoder simply does not have.

Thus, the old approach of providing an open GOP flag is simply not enough information to provide any real random access capability for complicated video coding standards, such as the one described immediately above. A more complete indication of when the decoder can actually begin to decode and display the pictures is needed.

### Random Access Points

In accordance with one embodiment, a picture sequence is provided with one or more random access points or RAPs. A random access point is effectively a location within a sequence of pictures that contains information that facilitates random access of the sequence.

As an example, consider Fig. 5 which illustrates an exemplary sequence of pictures generally at 500. This sequence has been encoded with an encoder that provides one or more random access points and the associated information that facilitates random access of the sequence. Here, a random access point or RAP 502 is indicated. Recall that a random access point can contain one or more both of the specification of an entry point and a recovery point. In this particular example, the random access point contains information associated with an entry point or EP 504, as well as information associated with a recovery point or RP 506. The entry and recovery points provide measures that a decoder can use to ascertain when its decoding activities will result in accurately and suitably decoded pictures.

In an alternative embodiment, a set of information to facilitate random access into a video sequence could be embodied in data not closely tied to a specific location in a picture sequence. For example, random access facilitation data establishing a starting point in the video stream for the decoding process to begin and establishing a later point in the video stream at which achievement of displayable video content is indicated may be contained in a separate data file or data storage area rather than being represented within the video stream at a particular location in the sequence of pictures.

### Entry Points

Entry points provide a measure associated with the starting location for the decoding processing or an amount of decoding that should take place relative to some defined location such as the random access point location, to have suitably decodable and displayable pictures at some point at or after the entry point. There are a number of ways in which the entry points can be defined. One way to define an entry point is in terms of what is referred to herein as a "pre-roll count". A pre-roll count is an indication of how many pictures prior to some defined picture should have been encountered and decoded in order to be assured that some defined picture and all subsequent pictures (in display order, in decoding order, or in both display order and decoding order) can be properly decoded.

Consider the situation where the defined picture for purposes of the entry point's definition is a picture associated with the random access point or, in other words, the "current picture". In this situation, the random access point might indicate that three pictures before the current picture would have needed to have been encountered and decoded if the current picture and subsequent pictures are to be decoded for proper display from that point forward. In this example, assume that the decoder randomly accessed sequence 500 at the picture before the entry point designated "Random Access", and attempted to decode all of the pictures that it received (this is referred to as a "best efforts" decoding and is discussed in more detail in the section entitled "Best Efforts Decoding" below). In this situation, the decoder will know, by virtue of having encountered and attempted to decode the pictures subsequent to the picture at which it randomly accessed the sequence, that the current picture and all subsequent pictures can be suitably decoded and displayed.

Notice in this example that the sequence does not necessarily need to utilize a recovery point that is separate from the location of the random access point. That is, the entry point information in the random access point indicated that if decoding started at a particular picture which was, in this example, decoded by the decoder, then the current picture and all subsequent pictures will be properly decoded and displayed.

Another way in which the entry point can be defined is in terms of time. For example, the entry point can be defmed in a manner that indicates to the decoder that if it started decoding ½ second or ¼ second prior to the random access point, then the current picture and all subsequent pictures can be suitably decoded and displayed.

### Recovery Points

A recovery point provides a measure of a location in the video sequence to be encountered during decoding processing or how much decoding should take place after some defined location such as the location of the random access point in order to have properly decodable and displayable pictures. A recovery point can be defined in terms of picture count or time. For example, at random access point 502, the recovery point can be defined to indicate that if the decoder starts decoding at the random access point, then ½ second from then all of the pictures will be able to be properly decoded and displayed. Alternately, the recovery point can be defined in terms of picture count. That is, the random access point can define the recovery point to be 3 pictures from the current picture. Thus, if the decoder attempts to decode the next 3 pictures, then the subsequent pictures that follow will be able to be properly decoded and displayed.

### Combining Entry Points and Recovery Points

In accordance with one embodiment, a random access point can contain information associated with both an entry point and a recovery point. In this situation, the random access point would be able to indicate to the decoder that if it started its decoding activities at some measured location in the past (i.e. at the entry point), then at some measured location in the future (i.e. the recovery point), all pictures will be properly decodable and displayable. For example, the entry point information might indicate that if decoding started two pictures ago, then ¼ second from now, at the recovery point, all of the pictures will be properly decodable and displayable.

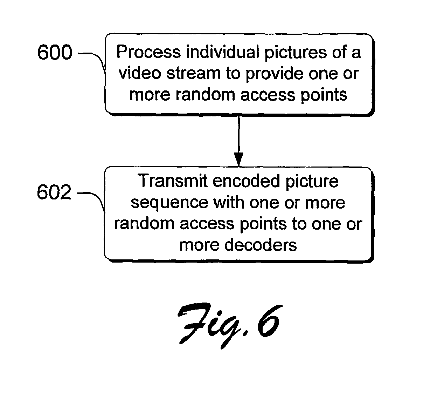

Fig. 6 is a flow diagram that describes steps in a method in accordance with one embodiment. The described method can be implemented in accordance with a suitably configured encoder.

Step 600 processes individual pictures of a video sequence to provide one or more random access points. The encoder can implement this step as it encodes individual pictures. By knowing the dependencies as between the individual pictures, the encoder is in a position to define the random access points. For example, the encoder may know that only two prior pictures are needed to decode a picture associated with a random access point. By virtue of this knowledge, the encoder can define a pre-roll count or an entry point that indicates to the decoder that it should have attempted to decode the previous two pictures if it wants to properly decode and display the current picture. Alternately or additionally, the encoder might know that if the decoder starts to decode at the current picture, then ¼-second from the current picture, all subsequent pictures can be properly decoded and displayed.

Step 602 transmits an encoded picture sequence with one or more random access points to one or more decoders. This step can be implemented in any suitable way using any suitable transmission medium.

### Decoder Operation

In accordance with one embodiment, there are two fundamental ways in which a decoder can operate in connection with the above-described random access points. The first way is referred to as "best efforts decoding" and the second way is referred to as "assured decoding", each of which is discussed immediately below in its own separately titled section.

### Best Efforts Decoding

When a decoder is configured to perform best efforts decoding, it will attempt to decode all of the pictures and picture regions that it sees. When the decoder sees a reference to a picture or picture region that it does not have, it can treat the reference to the missing picture as a reference to a picture filled with some such value as mid-level gray, black or some other specified or unspecified value. Alternatively, it can initialize the picture or region to be decoded to some value such as mid-level gray, black or some other specified or unspecified value. The decoder can then attempt to decode all of the pictures, but will consider the pictures completely correct in content only after the conditions indicated in the random access point are fulfilled (i.e. those conditions that are associated with the entry point and/or the recovery point).

Using the best efforts method provides encoders with maximum flexibility on how to encode subsequent pictures (for example, updating only a small part of each picture with intra information), while not necessarily burdening the decoder with work it would not already be capable of doing if it can decode the video stream at all. This method can also allow random access capabilities to be enabled using only P- or B- pictures in a sequence. Thus, random access points need not require the presence of I-pictures at or after the random access point.

### Assured Decoding

Assured decoding refers to a decoding paradigm in which the decoder decodes only the pictures that it knows it can decode. For example, if the decoder sees an I-picture, it decodes the I-picture because it knows it can. If, on the other hand, the decoder sees a P-picture, the decoder does not necessarily know that it can decode the P-picture so it will not attempt to do so. So, using the Fig. 5 sequence as an example, the decoder might then start at entry point 504 and only decode I-pictures until the conditions in the random access point are fulfilled. At the point at which the conditions are fulfilled, the decoder will then attempt to decode the non-I-pictures with assurances that the remaining pictures contain no references to unavailable data.

### Exemplary Decoding Methods

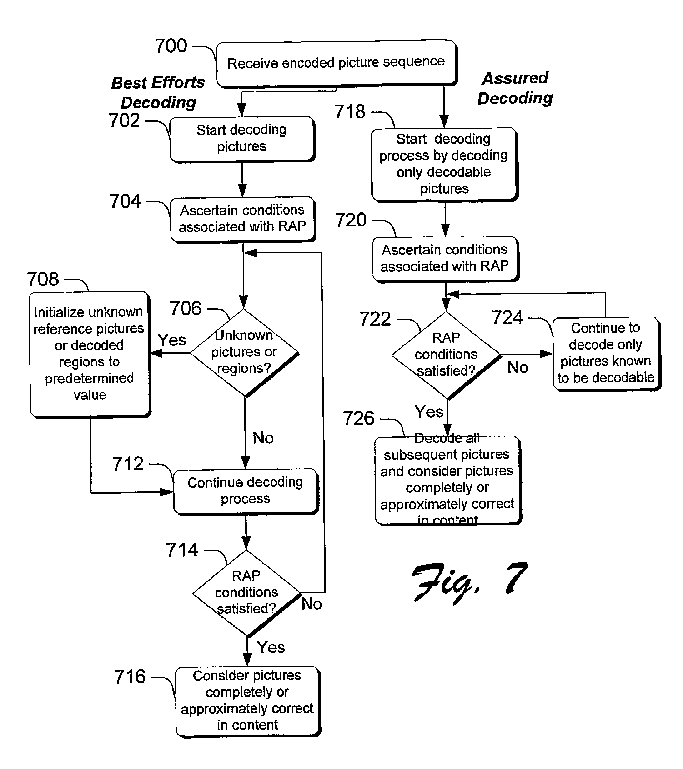

Fig. 7 is a flow diagram that describes steps in a method in accordance with one embodiment. The flow diagram illustrates both the "best efforts decoding" and the "assured decoding" paradigm described above. The methods can be implemented in connection with any suitably configured decoder.

Step 700 receives an encoded picture sequence that has been encoded in accordance with the techniques described above. In accordance with best efforts decoding, step 702 starts decoding pictures of the sequence. Here, the decoder attempts to decode each picture to the best of its ability using a technique such as the technique described in the "Best Efforts Decoding" section above. Step 704 ascertains the conditions associated with a random access point associated with the picture sequence. Although this step is illustrated as coming after step 702, such need not be the case. In one embodiment, the conditions that are ascertained by step 704 can be defined in terms of an entry point, recovery point, or both. Step 706 determines whether a picture or picture region is unknown. A picture or a region can be unknown if it references another picture or picture region that the decoder does not have. If the picture or region is unknown, step 708 initializes the missing picture that is referenced or the picture or region to be decoded to a pre-determined value and branches to step 712 to continue the decoding process from that point forward. Examples of pre-determined values are provided above. If, on the other hand, the picture or region is known (i.e. references a picture or region that the decoder has or does not need a reference picture), then step 712 continues the decoding process directly. Step 714 determines whether the conditions in the random access point are satisfied. If the conditions are not satisfied, then the method can return to step 706 to continue the decoding process. If, on the other hand, the conditions in the random access point are satisfied, then step 716 can consider subsequent pictures as being completely or approximately correct in content.

Step 718 describes steps associated with the assured decoding process described above. Accordingly, step 718 starts decoding pictures by decoding only pictures that it knows are decodable (e.g., only I-pictures). Step 720 ascertains conditions associated with the random access point. Although this step is illustrated as coming after step 718, such need not be the case. Step 722 determines whether the conditions in the random access point are satisfied. If the conditions are not satisfied, the step 724 continues to decode only pictures that it knows are decodable. If, on the other hand, the conditions in the random access point are satisfied, step 726 decodes all subsequent pictures.

### Video Splicing

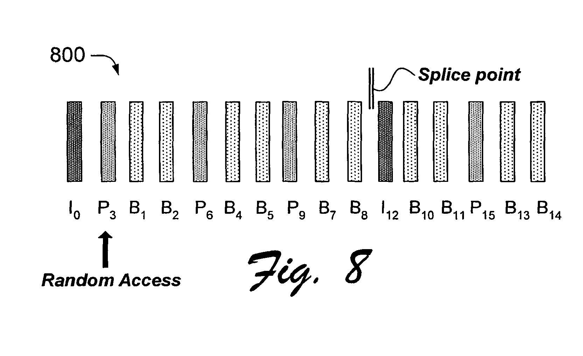

The techniques described above can be used in connection with video splicing to facilitate the decoding process. To aid in this explanation, consider Fig. 8 which indicates a picture sequence 800. Assume that the pictures up through and including picture B₈ pertain to a first portion of video such as a commercial, and that the pictures from I₁₂ on pertain to a movie. That is, the commercial sequence and the movie sequence have been spliced together at the indicated splice point. Here, there has been a switch between video streams from a stream associated with a commercial, to a stream associated with a movie.

Now, consider the problems that this can cause if the picture stream from I₁₂ on is an open GOP. Here, pictures B₁₀ and B₁₁ may assume the presence of a picture P₉ which is before the splice point. Although there is a picture P₉, it is not the picture that is associated with the movie. Rather, it is the picture associated with the commercial. Thus, if the decoder decodes B₁₀ and B₁₁ using P₉, then the pictures will not properly decode.

In the context of MPEG-2, a 1-bit flag known as a broken link flag was used to indicate a crude splice point. If the decoder saw a broken link flag, it used the flag as an indication that there was a crude splice point and that it should either not decode the two B-pictures, or if it decodes them, it should not try to use them for anything.

In much the same way that the complex references in the above-described video coding standards complicates random accesses into the picture sequence, the complex references also complicate treatment of picture sequences that have been digitally spliced. That is, now picture P₁₅ may refer back to picture P₉ so that not only are the two B-pictures going to decode improperly, but the P-picture will decode improperly as well.

In this situation, what really matters for purposes of the decoder recovering properly-decodable pictures is what the encoder used for referencing. Thus, it is really up to the encoder to make the referencing work out in such a way that the decoder can eventually recover a reasonable picture.

Thus, in this example, at any I-picture where the encoder might do a splice, it can provide a random access point having information that can facilitate the decoding process. Specifically, the encoder can provide one or more of an entry point and a recovery point to provide the decoder with information that it can use to properly decode and display pictures proximate the splice point. So, for example, at picture I₁₂, the encoder might provide an indication that such crude splicing occurred along with a random access point that indicates that a suitable recovery point from the splicing operation is ½-second ahead. Thus, the decoder will know, in the context of a digitally spliced picture sequence, when it can start decoding and displaying proper pictures.

### Exemplary Computing Environment

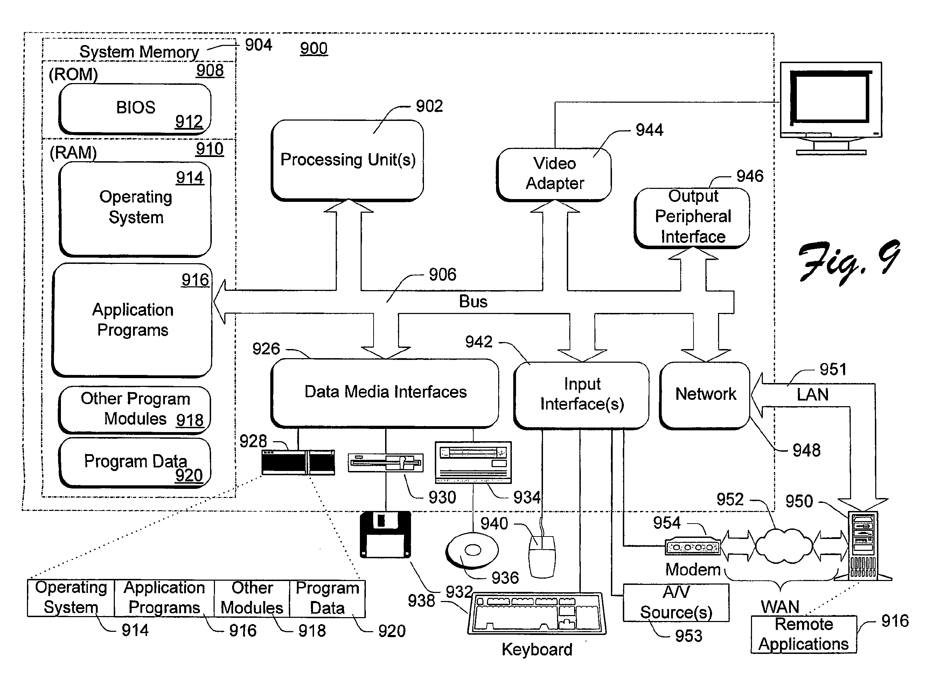

Fig. 9 illustrates an example of a suitable computing environment 900 on which the system and related methods described above can be implemented. The various components about to be described can be used to implement both suitably configured decoders and encoders.

It is to be appreciated that computing environment 900 is only one example of a suitable computing environment and is not intended to suggest any limitation as to the scope of use or functionality of the encoding/decoding system described above. Neither should the computing environment 900 be interpreted as having any dependency or requirement relating to any one or combination of components illustrated in the exemplary computing environment 900.

The various described embodiments can be operational with numerous other general purpose or special purpose computing system environments or configurations. Examples of well known computing systems, environments, and/or configurations that may be suitable for use with the media processing system include, but are not limited to, personal computers, server computers, thin clients, thick clients, hand-held or laptop devices, multiprocessor systems, microprocessor-based systems, set top boxes, programmable consumer electronics, network PCs, minicomputers, mainframe computers, distributed computing environments that include any of the above systems or devices, and the like.

In certain implementations, the system and related methods may well be described in the general context of computer-executable instructions, such as program modules, being executed by a computer. Generally, program modules include routines, programs, objects, components, data structures, etc. that perform particular tasks or implement particular abstract data types. The embodiments can also be practiced in distributed computing environments where tasks are performed by remote processing devices that are linked through a communications network. In a distributed computing environment, program modules may be located in both local and remote computer storage media including memory storage devices. Components of the described computing system can be used to implement an encoder and a decoder that functions as described above.

In accordance with the illustrated example embodiment of Fig. 9, computing system 900 is shown comprising one or more processors or processing units 902, a system memory 904, and a bus 906 that couples various system components including the system memory 904 to the processor 902.

Bus 906 is intended to represent one or more of any of several types of bus structures, including a memory bus or memory controller, a peripheral bus, an accelerated graphics port, and a processor or local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnects (PCI) bus also known as Mezzanine bus.

Computer 900 typically includes a variety of computer readable media. Such media may be any available media that is locally and/or remotely accessible by computer 900, and it includes both volatile and non-volatile media, removable and non-removable media.

In Fig. 9, the system memory 904 includes computer readable media in the form of volatile, such as random access memory (RAM) 910, and/or non-volatile memory, such as read only memory (ROM) 908. A basic input/output system (BIOS) 912, containing the basic routines that help to transfer information between elements within computer 900, such as during start-up, is stored in ROM 908. RAM 910 typically contains data and/or program modules that are immediately accessible to and/or presently be operated on by processing unit(s) 902.

Computer 900 may further include other removable/non-removable, volatile/non-volatile computer storage media. By way of example only, Fig. 9 illustrates a hard disk drive 928 for reading from and writing to a non-removable, non-volatile magnetic media (not shown and typically called a "hard drive"), a magnetic disk drive 930 for reading from and writing to a removable, non-volatile magnetic disk 932 (e.g., a "floppy disk"), and an optical disk drive 934 for reading from or writing to a removable, non-volatile optical disk 936 such as a CD-ROM, DVD-ROM or other optical media. The hard disk drive 928, magnetic disk drive 930, and optical disk drive 934 are each connected to bus 906 by one or more interfaces 926.

The drives and their associated computer-readable media provide nonvolatile storage of computer readable instructions, data structures, program modules, and other data for computer 900. Although the exemplary environment described herein employs a hard disk 928, a removable magnetic disk 932 and a removable optical disk 936, it should be appreciated by those skilled in the art that other types of computer readable media which can store data that is accessible by a computer, such as magnetic cassettes, flash memory cards, digital video disks, random access memories (RAMs), read only memories (ROM), and the like, may also be used in the exemplary operating environment.

A number of program modules may be stored on the hard disk 928, magnetic disk 932, optical disk 936, ROM 908, or RAM 910, including, by way of example, and not limitation, an operating system 914, one or more application programs 916 (e.g., multimedia application program 924), other program modules 918, and program data 920. A user may enter commands and information into computer 900 through input devices such as keyboard 938 and pointing device 940 (such as a "mouse"). Other input devices may include a audio/video input device(s) 953, a microphone, joystick, game pad, satellite dish, serial port, scanner, or the like (not shown). These and other input devices are connected to the processing unit(s) 902 through input interface(s) 942 that is coupled to bus 906, but may be connected by other interface and bus structures, such as a parallel port, game port, or a universal serial bus (USB).

A monitor 956 or other type of display device is also connected to bus 906 via an interface, such as a video adapter or video/graphics card 944. In addition to the monitor, personal computers typically include other peripheral output devices (not shown), such as speakers and printers, which may be connected through output peripheral interface 946.

Computer 900 may operate in a networked environment using logical connections to one or more remote computers, such as a remote computer 950. Remote computer 950 may include many or all of the elements and features described herein relative to computer.

As shown in Fig. 9, computing system 900 is communicatively coupled to remote devices (e.g., remote computer 950) through a local area network (LAN) 951 and a general wide area network (WAN) 952. Such networking environments are commonplace in offices, enterprise-wide computer networks, intranets, and the Internet.

When used in a LAN networking environment, the computer 900 is connected to LAN 951 through a suitable network interface or adapter 948. When used in a WAN networking environment, the computer 900 typically includes a modem 954 or other means for establishing communications over the WAN 952. The modem 954, which may be internal or external, may be connected to the system bus 906 via the user input interface 942, or other appropriate mechanism.

In a networked environment, program modules depicted relative to the personal computer 900, or portions thereof, may be stored in a remote memory storage device. By way of example, and not limitation, Fig. 9 illustrates remote application programs 916 as residing on a memory device of remote computer 950. It will be appreciated that the network connections shown and described are exemplary and other means of establishing a communications link between the computers may be used.

### Conclusion

The various embodiments described above provide approaches that facilitate decoding in the context of video coding methods that allow for complicated dependencies among pictures of an encoded sequence of pictures. Particular advantages can be achieved, in some embodiments, in the context of randomly accessing picture sequences that utilize such complicated picture dependencies.

Although the invention has been described in language specific to structural features and/or methodological steps, it is to be understood that the invention defined in the appended claims is not necessarily limited to the specific features or steps described. Rather, the specific features and steps are disclosed as preferred forms of implementing the claimed invention.

## Claims

1. A method comprising, at a video decoder:
receiving (700) and decoding (702) first information for a first location in a video sequence of pictures (500), wherein the first location is a random access point location (502) in the video sequence (500); and
decoding pictures at or after the random access point location (502), the random access point facilitating random access of the video sequence (500) by the video decoder;
the method **characterized in that**:
the first information comprises second information indicating a second location (506) in the video sequence (500), wherein pictures at or after, but not before, the second location (506) are displayable with an assured level of correctness after random access, the second location (506) being at or after the random access point location (502).

2. A method comprising, at a video encoder:
encoding first information (600) for a first location in a video sequence of pictures (500), wherein the first location is a random access point location (502) in the video sequence (500), wherein pictures at or after the random access point location (502) are to be decoded by a video decoder, the encoded first information facilitating random access of the video sequence (500) by the video decoder; and
transmitting the encoded first information (602);
the method **characterized in that**:
the encoded first information comprises second information indicating a second location (506) in the video sequence (500), wherein pictures at or after, but not before, the second location (506) are displayable with an assured level of correctness after random access, the second location (506) being at or after the random access point location (502).

3. The method of claim 1 or 2 further **characterized in that**:
one or more of the pictures at or after the random access point location (502) have one or more references to pictures not available to the video decoder (706).

4. The method of claim 3 wherein the one or more references to pictures not available to the video decoder include references to pictures before the random access point location (502).

5. The method of claim 3 wherein the one or more references to pictures not available to the video decoder include references to pictures before and after the random access point location (502).

6. The method of claim 3 wherein the one or more references to pictures not available to the video decoder include references to pictures after the random access point location (502).

7. The method of any of claims 3 to 6 wherein the one or more pictures at or after the random access point location (502) that have one or more references to pictures not available to the video decoder include at least one P-picture.

8. The method of any of claims 3 to 6 wherein the one or more pictures at or after the random access point location (502) that have one or more references to pictures not available to the video decoder include at least one B-picture.

9. The method of any of claims 3 to 8 wherein the one or more references to pictures not available to the video decoder are treated as referring to pictures with predetermined values (708).

10. The method of claim 9 wherein the predetermined values (708) are mid-level gray values.

11. The method of claim of any of claims 1 to 10 wherein the first information further comprises video splicing information.

12. The method of claim 11 wherein the video splicing information comprises a broken link flag.

13. The method of any of claims 1 to 12 wherein the random access point location (502) is at an I-picture.

14. The method of any of claims 1 to 12 wherein the random access point location (502) is at a P-picture.

15. The method of any of claims 1 to 12 wherein the random access point location (502) is at a B-picture.

16. The method of claim 2 further comprising:
encoding first information for each of one or more additional random access point locations (502) in the video sequence (500).

17. A computer readable medium storing computer executable instructions for causing a computer system to perform the method of any of claims 1 to 16.

## Patentansprüche

1. Verfahren, das in einer Video-Decodiervorrichtung umfasst:
Empfangen (700) und Decodieren (702) erster Informationen für eine erste Position in einer Video-Sequenz von Bildern (500), wobei die erste Position eine Position (502) eines Punktes beliebigen Zugriffs in der Video-Sequenz (500) ist; und
Decodieren von Bildern an oder nach der Position (502) des Punktes beliebigen Zugriffs, wobei der beliebige Punkt beliebigen Zugriffs beliebigen Zugriff auf die Video-Sequenz (500) durch die Video-Decodiervorrichtung ermöglicht;
und das Verfahren **dadurch gekennzeichnet ist, dass**:
die ersten Informationen zweite Informationen umfassen, die eine zweite Position (506) in der Video-Sequenz (500) anzeigen, wobei Bilder an oder nach, jedoch nicht vor der zweiten Position (506) mit einem gesicherten Niveau an Richtigkeit nach beliebigem Zugriff angezeigt werden können und die zweite Position (506) an oder nach der Position (502) des Punktes beliebigen Zugriffs liegt.

2. Verfahren, das eine Video-Decodiervorrichtung umfasst:
Codieren erster Informationen (600) für eine erste Position in einer Video-Sequenz von Bildern (500), wobei die erste Position eine beliebige Zugriffspunkt-position (502) in der Video-Sequenz (500) ist, Bilder an oder nach der beliebigen Zugriffspunkt-Position (502) durch eine Video-Decodiervorrichtung zu decodieren sind und die codierten ersten Informationen beliebigen Zugriff auf die Video-Sequenz (500) durch die Video-Decodiervorrichtung ermöglichen; und
Senden der codierten ersten Informationen (602);
wobei das Verfahren **dadurch gekennzeichnet ist, dass**
die codierten ersten Informationen zweite Informationen umfassen, die eine zweite Position (506) in der Video-Sequenz (500) anzeigen, wobei Bilder an oder nach, jedoch nicht vor der zweiten Position (506) mit einem gesicherten Niveau an Richtigkeit nach beliebigem Zugriff angezeigt werden können und die zweite Position (506) an und/oder nach der Position (502) des Punktes beliebigen Zugriffs liegt.

3. Verfahren nach Anspruch 1 oder 2, des Weiteren **dadurch gekennzeichnet, dass**:
eines oder mehrere der Bilder an oder nach der Position (502) des Punktes beliebigen Zugriffs einen Bezug oder mehrere Bezüge zu Bildern haben, die der Video-Decodiervorrichtung (706) nicht verfügbar sind.

4. Verfahren nach Anspruch 3, wobei der eine Bezug oder die mehreren Bezüge zu Bildern, die der Video-Decodiervorrichtung nicht verfügbar sind, Bezüge zu Bildern vor der Position (502) des Punktes beliebigen Zugriffs enthalten.

5. Verfahren nach Anspruch 3, wobei der eine Bezug oder die mehreren Bezüge zu Bildern, die der Video-Decodiervorrichtung nicht verfügbar sind, Bezüge zu Bildern vor und nach der Position (502) des Punktes beliebigen Zugriffs enthalten.

6. Verfahren nach Anspruch 3, wobei der eine Bezug oder die mehreren Bezüge zu Bildern, die der Video-Decodiervorrichtung nicht verfügbar sind, Bezüge zu Bildern nach der Position (502) des Punktes beliebigen Zugriffs enthalten.

7. Verfahren nach einem der Ansprüche 3 bis 6, wobei das eine oder die mehreren Bilder von oder nach der Position (502) des Punktes beliebigen Zugriffs, die einen Bezug oder mehrere Bezüge zu Bildern haben, die der Video-Decodiervorrichtung nicht verfügbar sind, wenigstens ein P-Bild enthalten.

8. Verfahren nach einem der Ansprüche 3 bis 6, wobei das eine oder die mehreren Bilder von oder nach der Position (502) des Punktes beliebigen Zugriffs, die einen Bezug oder mehrere Bezüge zu Bildern haben, die der Video-Decodiervorrichtung nicht verfügbar sind, wenigstens ein B-Bild enthalten.

9. Verfahren nach einem der Ansprüche 3 bis 8, wobei der eine Bezug oder die mehreren Bezüge zu Bildern, die der Video-Decodiervorrichtung nicht verfügbar sind, als auf Bilder mit vorgegebenen Werten auf (708) bezogen behandelt werden.

10. Verfahren nach Anspruch 9, wobei die vorgegebenen Werte (708) Mittel-Grauwerte sind.

11. Verfahren nach einem der Ansprüche 1 bis 10, wobei die ersten Informationen des weiteren Video-Übergangs-Informationen umfassen.

12. Verfahren nach Anspruch 11, wobei die Video-Übergangs-Informationen ein Flag einer unterbrochenen Verbindung umfassen.

13. Verfahren nach einem der Ansprüche 1 bis 12, wobei die Position (502) des Punktes beliebigen Zugriffs an einem I-Bild liegt.

14. Verfahren nach einem der Ansprüche 1 bis 12, wobei die Position (502) des Punktes beliebigen Zugriffs an einem P-Bild liegt.

15. Verfahren nach einem der Ansprüche 1 bis 12, wobei die Position (502) des Punktes beliebigen Zugriffs an einem B-Bild liegt.

16. Verfahren nach Anspruch 2, das des Weiteren umfasst:
Codieren erster Informationen für eine oder mehrere zusätzliche Positionen (502) eines Punktes beliebigen Zugriffs in der Video-Sequenz (500).

17. Computerlesbares Medium, das durch Computer ausführbare Befehle speichert, die ein Computersystem veranlassen, das Verfahren nach einem der Ansprüche 1 bis 16 durchzuführen.

## Revendications

1. Procédé comprenant, sur un décodeur vidéo :
la réception (700) et le décodage (702) de premières informations pour un premier emplacement dans une séquence vidéo d'images (500), dans laquelle le premier emplacement est un emplacement de point d'accès aléatoire (502) dans la séquence vidéo (500) ; et
le décodage d'images à l'emplacement de point d'accès aléatoire (502), ou après, le point d'accès aléatoire facilitant l'accès aléatoire de la séquence vidéo (500) par le décodeur vidéo ;
le procédé étant **caractérisé en ce que** :
les premières informations comportent des secondes informations indiquant un second emplacement (506) dans la séquence vidéo (500), dans laquelle les images situées au niveau du second emplacement (506), ou après, mais pas avant, peuvent être affichées avec un niveau assuré d'exactitude après l'accès aléatoire, le second emplacement (506) se trouvant au niveau de l'emplacement de point d'accès aléatoire, ou après (502).

2. Procédé comprenant, sur un codeur vidéo :
le codage de premières informations (600) pour un premier emplacement dans une séquence vidéo d'images (500), dans laquelle le premier emplacement est un emplacement de point d'accès aléatoire (502) dans la séquence vidéo (500), dans laquelle des images situées au niveau de l'emplacement de point d'accès aléatoire (502), ou après, doivent être décodées par un décodeur vidéo, les premières informations codées facilitant l'accès aléatoire de la séquence vidéo (500) par le décodeur vidéo ; et
la transmission des premières informations codées (602) ;
le procédé étant **caractérisé en ce que** :
les premières informations codées comportent des secondes informations indiquant un second emplacement (506) dans la séquence vidéo (500), dans laquelle les images situées au second emplacement (506), ou après, mais pas avant, peuvent être affichées avec un niveau assuré d'exactitude après l'accès aléatoire, le second emplacement (506) se trouvant au niveau de l'emplacement de point d'accès aléatoire (502), ou après.

3. Procédé selon la revendication 1 ou 2, **caractérisé en outre en ce que** :
une ou plusieurs des images situées au niveau de l'emplacement de point d'accès aléatoire (502), ou après, ont une ou plusieurs références à des images non disponibles pour le décodeur vidéo (706).

4. Procédé selon la revendication 3, dans lequel la ou les références à des images non disponibles dans le décodeur vidéo incluent des références à des images avant l'emplacement de point d'accès aléatoire (502).

5. Procédé selon la revendication 3, dans lequel la ou les références à des images non disponibles dans le décodeur vidéo incluent des références à des images situées avant ou après l'emplacement de point d'accès aléatoire (502).

6. Procédé selon la revendication 3, dans lequel la ou les références à des images non disponibles dans le décodeur vidéo incluent des références à des images après l'emplacement de point d'accès aléatoire (502).

7. Procédé selon l'une quelconque des revendications 3 à 6, dans lequel la ou les images situées au niveau de l'emplacement de point d'accès aléatoire (502), ou après, qui ont une ou plusieurs références à des images non disponibles pour le décodeur vidéo incluent au moins une image P.

8. Procédé selon l'une quelconque des revendications 3 à 6, dans lequel la ou les images situées au niveau de l'emplacement de point d'accès aléatoire (502), ou après, qui ont une ou plusieurs références à des images non disponibles pour le décodeur vidéo incluent au moins une image B.

9. Procédé selon l'une quelconque des revendications 3 à 8, dans lequel la ou les références aux images non disponibles pour le décodeur vidéo sont traitées comme se référant à des images ayant des valeurs prédéterminées (708).

10. Procédé selon la revendication 9, dans lequel les valeurs prédéterminées (708) sont des valeurs de niveau intermédiaire de gris.

11. Procédé selon l'une quelconque des revendications 1 à 10, dans lequel les premières informations comportent en outre des informations de raccordement de vidéo.

12. Procédé selon la revendication 11, dans lequel les informations de raccordement de vidéo comportent un indicateur de lien coupé.

13. Procédé selon l'une quelconque des revendications 1 à 12, dans lequel l'emplacement de point d'accès aléatoire (502) se situe sur une image I.

14. Procédé selon l'une quelconque des revendications 1 à 12, dans lequel l'emplacement de point d'accès aléatoire (502) se situe sur une image P.

15. Procédé selon l'une quelconque des revendications 1 à 12, dans lequel l'emplacement de point d'accès aléatoire (502) se situe sur une image B.

16. Procédé selon la revendication 2, comprenant en outre :
le codage de premières informations pour chacun des emplacements de point d'accès aléatoire supplémentaire (502) dans la séquence vidéo (500).

17. Support lisible par ordinateur servant à stocker des instructions exécutables par ordinateur de sorte qu'un système d'ordinateur mette en oeuvre le procédé conforme à l'une quelconque des revendications 1 à 16.
